(19) Europäisches Patentamt
European Patent Office
Office européen des brevets

(11) EP 3 397 057 B1

(12) **EUROPEAN PATENT SPECIFICATION**

(45) Date of publication and mention of the grant of the patent:
**06.05.2020 Bulletin 2020/19**

(21) Application number: **16882405.0**

(22) Date of filing: **22.12.2016**

(51) Int Cl.:
***A01P 3/00*** *(2006.01)* ***A01N 43/90*** *(2006.01)*
***A01N 43/56*** *(2006.01)*

(86) International application number:
**PCT/US2016/068183**

(87) International publication number:
**WO 2017/116936 (06.07.2017 Gazette 2017/27)**

(54) **SYNERGISTIC FUNGICIDAL MIXTURES FOR FUNGAL CONTROL OF RICE BLAST**

SYNERGISTISCHE FUNGIZIDGEMISCHE ZUR PILZBEKÄMPFUNG BEI REISBRÄUNE

MÉLANGES FONGICIDES SYNERGIQUES POUR LA LUTTE FONGICIDE CONTRE LA PIRICULARIOSE DU RIZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2015 US 201562273396 P**

(43) Date of publication of application:
**07.11.2018 Bulletin 2018/45**

(73) Proprietor: **Dow Agrosciences LLC**
**Indianapolis, IN 46268 (US)**

(72) Inventors:
- **MATHIESON, John T.**
**Indianapolis**
**IN 46268 (US)**
- **MANN, Richard K.**
**Indianapolis**
**IN 46268 (US)**
- **KEMMITT, Greg**
**Indianapolis**
**IN 46268 (US)**
- **CORREA DA SILVA, Olavo**
**Indianapolis**
**IN 46268 (US)**

(74) Representative: **f & e patent**
**Braunsberger Feld 29**
**51429 Bergisch Gladbach (DE)**

(56) References cited:
**CN-A- 103 385 256**
**US-A1- 2012 258 989**
**US-A1- 2014 193 472**
**US-A1- 2015 344 445**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 397 057 B1

## Description

### FIELD OF THE INVENTION

This disclosure concerns a synergistic fungicidal composition containing (a) tricyclazole, and (b) benzovindiflupyr, to provide control of any plant fungal pathogen.

### BACKGROUND

Fungicides are compounds, of natural or synthetic origin, which act to protect plants against damage caused by fungi. Current methods of agriculture rely heavily on the use of fungicides. In fact, some crops cannot be grown usefully without the use of fungicides. Using fungicides allows a grower to increase the yield and the quality of the crop, and consequently, increase the value of the crop. In most situations, the increase in value of the crop is worth at least three times the cost of the use of the fungicide.

However, no one fungicide is useful in all situations and repeated usage of a single fungicide frequently leads to the development of resistance to that and related fungicides. Consequently, research is being conducted to produce fungicides and combinations of fungicides that are safer, that have better performance, that require lower dosages, that are easier to use, and that cost less.

Synergism occurs when the activity of two or more compounds exceeds the activities of the compounds when used alone.

It is an object of this disclosure to provide synergistic compositions comprising fungicidal compounds. It is a further object of this disclosure to provide processes that use these synergistic compositions. The synergistic compositions are capable of preventing or curing, or both, diseases caused by fungi of the classes *Ascomycetes* and *Basidiomycetes.* In addition, the synergistic compositions have improved efficacy against the *Ascomycete* and *Basidiomycete* pathogens, including leaf blotch and brown rust of wheat. In accordance with this disclosure, synergistic compositions are provided along with methods for their use. CN 103 385 256 A discloses combinations of fluxapyroxad with tricyclazole.

Detailed Description

The present disclosure concerns a synergistic fungicidal mixture comprising an fungicidally effective amount of (a) tricyclazole, and (b) benzovindiflupyr, to provide control of any plant fungal pathogen.

As used herein, tricyclazole is the common name for 5-methyl-1,2,4-triazolo[3,4-*b*][1,3]benzothiazole and possesses the following structure:

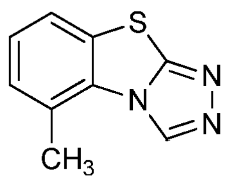

Its fungicidal activity is described in The Pesticide Manual, Fifteenth Edition, 2009. Tricyclazole provides control of rice blast (*Pyricularia oryzae*) in transplanted and direct-seeded rice, at 100 g/ha.

As used herein, benzovindiflupyr is the common name for *N*-[(1*RS*,4*SR*)-9-(dichloromethylene)-1,2,3,4-tetrahydro-1,4-methanonaphthalen-5-yl]-3-(difluoromethyl)-1-methylpyrazole-4-carboxamide and possesses the following structure:

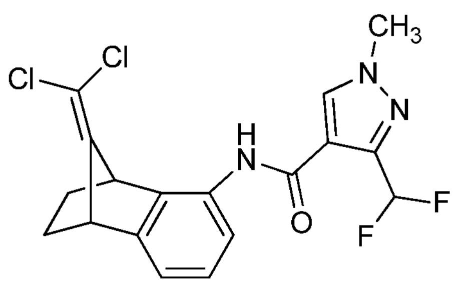

Its fungicidal activity is exemplified Agrow Intelligence (https://www.agranet.net/agra/agrow/databases/agrow-intelligence/). Exemplary uses of benzovindiflupyr include, but are not limited to, controlling a variety of pathogens such as *Botrytis* spp., *Erysiphe* spp., *Rhizoctonia* spp., *Septoria* spp., *Phytophthora* spp., *Pythium* spp., *Phakospora pachyrhizi,* and *Puccinia recondita,* in a range of crops including vines, cereals, soybeans, cotton, and fruit and vegetable crops.

As used herein, fluxapyroxad is the common name for 3-(difluoromethyl)-1-methyl-*N*-(3',4',5'-trifluorobiphenyl-2-yl)pyrazole-4-carboxamide and possesses the following structure:

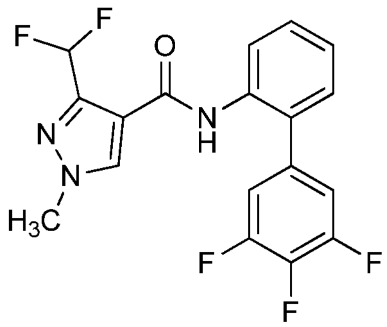

Its fungicidal activity is exemplified Agrow Intelligence (https://www.agranet.net/agra/agrow/databases/agrow-intelligence/). Exemplary uses of fluxapyroxad include, but are not limited to, the control of plant pathogens, such as *Helminthosporium teres* (net blotch), *Rhynchosporium secalis* (leaf scald), *Puccinia hordei* (brown rust), and *Erysiphe graminis* f.sp. *hordei* (powdery mildew) in a range of crops, such as barley, maize, and soybeans. (45 - 200 g ai/ha; http://www.apsnet.org/meetings/Documents/2011_Meeting_Abstracts/a11ma1008.htm).

In the compositions described herein, the concentration ratio of tricyclazole at which the fungicidal effect is synergistic with the other fungicides lies within the range of about 1:250 and 4:1 in One Day Protectant (1DP) assays.

In one embodiment, the concentration ratio of tricyclazole to benzovindiflupyr at which the fungicidal effect is synergistic lies within the range of between about 1:4 and about 4:1 in 1DP assays.

The rate at which the synergistic composition is applied will depend upon the particular type of fungus to be controlled, the degree of control required and the timing and method of application. In general, the composition of the disclosure can be applied at an application rate of between about 0.125 parts per million (ppm) and about 25.1 ppm based on the total amount of active ingredients in the composition.

The synergistic composition comprising benzovindiflupyr and tricyclazole is applied at a rate between about 0.125 ppm and about 0.5 ppm. Benzovindiflupyr is applied at a rate between about 0.025 ppm and about 0.4 ppm and tricyclazole is applied at a rate of 0.1 ppm.

The components of the synergistic mixture of the present disclosure can be applied either separately or as part of a multipart fungicidal system.

The synergistic mixture of the present disclosure can be applied in conjunction with one or more other fungicides to control a wider variety of undesirable diseases. When used in conjunction with other fungicide(s), the presently claimed compounds may be formulated with the other fungicide(s), tank mixed with the other fungicide(s) or applied sequentially with the other fungicide(s). Such other fungicides may include 2-(thiocyanatomethylthio)-benzothiazole, 2-phenylphenol, 8-hydroxyquinoline sulfate, ametoctradin, amisulbrom, antimycin, *Ampelomyces quisqualis,* azaconazole, azoxystrobin, *Bacillus subtilis, Bacillus subtilis* strain QST713, benalaxyl, benomyl, benthiavalicarb-isopropyl, benzylaminobenzene-sulfonate (BABS) salt, bicarbonates, biphenyl, bismerthiazol, bitertanol, bixafen, blasticidin-S, borax, Bordeaux mixture, boscalid, bromuconazole, bupirimate, calcium polysulfide, captafol, captan, carbendazim, carboxin, carpropamid, carvone, chlazafenone, chloroneb, chlorothalonil, chlozolinate, *Coniothyrium minitans,* copper hydroxide, copper octanoate, copper oxychloride, copper sulfate, copper sulfate (tribasic), coumoxystrobin, cuprous oxide, cyazofamid, cyflufenamid, cymoxanil, cyproconazole, cyprodinil, dazomet, debacarb, diammonium ethylenebis-(dithiocarbamate), dichlofluanid, dichlorophen, diclocymet, diclomezine, dichloran, diethofencarb, difenoconazole, difenzoquat ion, diflumetorim, dimethomorph, dimoxystrobin, diniconazole, diniconazole-M, dinobuton, dinocap, diphenylamine, dipymetitrone, dithianon, dodemorph, dodemorph acetate, dodine, dodine free base, edifenphos, enestrobin, enestroburin, enoxastrobin, epoxiconazole, ethaboxam, ethoxyquin, etridiazole, famoxadone, fenamidone, fenaminstrobin, fenarimol, fenbuconazole, fenfuram, fenhexamid, fenoxanil, fenpiclonil, fenpropidin, fenpropimorph, fenpyrazamine, fentin, fentin acetate, fentin hydroxide, ferbam, ferimzone, fluazinam, fludioxonil, flufenoxystrobin, flumorph, fluopicolide, fluopyram, fluoroimide, fluoxastrobin, fluquinconazole, flusilazole, flusulfamide, flutianil, flutolanil, flutriafol, folpet, formaldehyde, fosetyl, fosetyl-aluminium, fuberidazole, furalaxyl, furametpyr, guazatine, guazatine acetates, GY-81, hexachlorobenzene, hexaconazole, hymexazol, imazalil, imazalil sulfate, imibenconazole, iminoctadine, iminoctadine triacetate, iminoctadine tris(albesilate), iodocarb, ipconazole, ipfenpyrazolone, iprobenfos, iprodione, iprovalicarb, isofetamide, isoprothiolane, isopyrazam, isotianil, kasugamycin, kasugamycin hydrochloride hydrate, kresoxim-methyl, laminarin, mancopper, mancozeb,

mandestrobin, mandipropamid, maneb, mefenoxam, mepanipyrim, mepronil, meptyl-dinocap, mercuric chloride, mercuric oxide, mercurous chloride, metalaxyl, metalaxyl-M, metam, metam-ammonium, metam-potassium, metam-sodium, metconazole, methasulfocarb, methyl iodide, methyl isothiocyanate, metiram, metominostrobin, metrafenone, mildiomycin, myclobutanil, nabam, nitrothal-isopropyl, nuarimol, octhilinone, ofurace, oleic acid (fatty acids), orysastrobin, oxadixyl, oxathiapiprolin, oxine-copper, oxpoconazole fumarate, oxycarboxin, pefurazoate, penconazole, pencycuron, penflufen, pentachlorophenol, pentachlorophenyl laurate, penthiopyrad, phenylmercury acetate, phosphonic acid, phthalide, picarbutrazox, picoxystrobin, polyoxin B, polyoxins, polyoxorim, potassium bicarbonate, potassium hydroxyquinoline sulfate, probenazole, prochloraz, procymidone, propamocarb, propamocarb hydrochloride, propiconazole, propineb, proquinazid, prothioconazole, pyraclostrobin, pyrametostrobin, pyraoxystrobin, pyraziflumid, pyrazophos, pyribencarb, pyributicarb, pyrifenox, pyrimethanil, pyriofenone, pyrisoxazole, pyroquilon, quinoclamine, quinoxyfen, quintozene, *Reynoutria sachalinensis* extract, sedaxane, silthiofam, simeconazole, sodium 2-phenylphenoxide, sodium bicarbonate, sodium pentachlorophenoxide, spiroxamine, sulfur, SYP-Z048, tar oils, tebuconazole, tebufloquin, tecnazene, tetraconazole, thiabendazole, thifluzamide, thiophanate-methyl, thiram, tiadinil, tolclofos-methyl, tolprocarb, tolylfluanid, triadimefon, triadimenol, triazoxide, triclopyricarb, tridemorph, trifloxystrobin, triflumizole, triforine, triticonazole, validamycin, valifenalate, valiphenal, vinclozolin, zineb, ziram, zoxamide, *Candida oleophila, Fusarium oxysporum, Gliocladium* spp., *Phlebiopsis gigantea, Streptomyces griseoviridis, Trichoderma* spp., (*RS*)-*N*-(3,5-dichlorophenyl)-2-(methoxymethyl)-succinimide, 1,2-dichloropropane, 1,3-dichloro-1,1,3,3-tetrafluoroacetone hydrate, 1-chloro-2,4-dinitronaphthalene, 1-chloro-2-nitropropane, 2-(2-heptadecyl-2-imidazolin-1-yl)ethanol, 2,3-dihydro-5-phenyl-1,4-dithi-ine 1,1,4,4-tetraoxide, 2-methoxyethylmercury acetate, 2-methoxyethylmercury chloride, 2-methoxyethylmercury silicate, 3-(4-chlorophenyl)-5-methylrhodanine, 4-(2-nitroprop-1-enyl)phenyl thiocyanateme, ampropylfos, anilazine, azithiram, barium polysulfide, Bayer 32394, benodanil, benquinox, bentaluron, benzamacril; benzamacril-isobutyl, benzamorf, binapacryl, bis(methylmercury) sulfate, bis(tributyltin) oxide, buthiobate, cadmium calcium copper zinc chromate sulfate, carbamorph, CECA, chlobenthiazone, chloraniformethan, chlorfenazole, chlorquinox, climbazole, copper bis(3-phenylsalicylate), copper zinc chromate, cufraneb, cupric hydrazinium sulfate, cuprobam, cyclafuramid, cypendazole, cyprofuram, decafentin, dichlone, dichlozoline, diclobutrazol, dimethirimol, dinocton, dinosulfon, dinoterbon, dipyrithione, ditalimfos, dodicin, drazoxolon, EBP, ESBP, etaconazole, etem, ethirim, fenaminosulf, fenapanil, fenitropan, fluotrimazole, furcarbanil, furconazole, furconazole-cis, furmecyclox, furophanate, glyodine, griseofulvin, halacrinate, Hercules 3944, hexylthiofos, ICIA0858, isopamphos, isovaledione, mebenil, mecarbinzid, metazoxolon, methfuroxam, methylmercury dicyandiamide, metsulfovax, milneb, mucochloric anhydride, myclozolin, N-3,5-dichlorophenyl-succinimide, *N*-3-nitrophenylitaconimide, natamycin, *N*-ethylmercurio-4-toluenesulfonanilide, nickel bis(dimethyldithiocarbamate), OCH, phenylmercury dimethyldithiocarbamate, phenylmercury nitrate, phosdiphen, prothiocarb; prothiocarb hydrochloride, pyracarbolid, pyridinitril, pyroxychlor, pyroxyfur, quinacetol; quinacetol sulfate, quinazamid, quinconazole, rabenzazole, salicylanilide, SSF-109, sultropen, tecoram, thiadifluor, thicyofen, thiochlorfenphim, thiophanate, thioquinox, tioxymid, triamiphos, triarimol, triazbutil, trichlamide, urbacid, zarilamid, and any combinations thereof.

The compositions of the present disclosure are preferably applied in the form of a formulation comprising a composition of (a) tricyclazole and (b) benzovindiflupyr, together with a phytologically acceptable carrier.

Concentrated formulations can be dispersed in water, or another liquid, for application, or formulations can be dust-like or granular, which can then be applied without further treatment. The formulations are prepared according to procedures which are conventional in the agricultural chemical art, but which are novel and important because of the presence therein of a synergistic composition.

The formulations that are applied most often are aqueous suspensions or emulsions. Either such water-soluble, water-suspendable, or emulsifiable formulations are solids, usually known as wettable powders, or liquids, usually known as emulsifiable concentrates, aqueous suspensions, or suspension concentrates. The present disclosure contemplates all vehicles by which the synergistic compositions can be formulated for delivery and use as a fungicide.

As will be readily appreciated, any material to which these synergistic compositions can be added may be used, provided they yield the desired utility without significant interference with the activity of these synergistic compositions as antifungal agents.

Wettable powders, which may be compacted to form water-dispersible granules, comprise an intimate mixture of the synergistic composition, a carrier and agriculturally acceptable surfactants. The concentration of the synergistic composition in the wettable powder is usually from about 10% to about 90% by weight, more preferably about 25% to about 75% by weight, based on the total weight of the formulation. In the preparation of wettable powder formulations, the synergistic composition can be compounded with any of the finely divided solids, such as prophyllite, talc, chalk, gypsum, Fuller's earth, bentonite, attapulgite, starch, casein, gluten, montmorillonite clays, diatomaceous earths, purified silicates or the like. In such operations, the finely divided carrier is ground or mixed with the synergistic composition in a volatile organic solvent. Effective surfactants, comprising from about 0.5% to about 10% by weight of the wettable powder, include sulfonated lignins, naphthalenesulfonates, alkylbenzenesulfonates, alkyl sulfates, and non-ionic surfactants, such as ethylene oxide adducts of alkyl phenols.

Emulsifiable concentrates of the synergistic composition comprise a convenient concentration, such as from

about 10% to about 50% by weight, in a suitable liquid, based on the total weight of the emulsifiable concentrate formulation. The components of the synergistic compositions, jointly or separately, are dissolved in a carrier, which is either a water-miscible solvent or a mixture of water-immiscible organic solvents, and emulsifiers. The concentrates may be diluted with water and oil to form spray mixtures in the form of oil-in-water emulsions. Useful organic solvents include aromatics, especially the high-boiling naphthalenic and olefinic portions of petroleum such as heavy aromatic naphtha. Other organic solvents may also be used, such as, for example, terpenic solvents, including rosin derivatives, aliphatic ketones, such as cyclohexanone, and complex alcohols, such as 2-ethoxyethanol.

Emulsifiers which can be advantageously employed herein can be readily determined by those skilled in the art and include various nonionic, anionic, cationic and amphoteric emulsifiers, or a blend of two or more emulsifiers. Examples of nonionic emulsifiers useful in preparing the emulsifiable concentrates include the polyalkylene glycol ethers and condensation products of alkyl and aryl phenols, aliphatic alcohols, aliphatic amines or fatty acids with ethylene oxide, propylene oxides such as the ethoxylated alkyl phenols and carboxylic esters solubilized with the polyol or polyoxyalkylene. Cationic emulsifiers include quaternary ammonium compounds and fatty amine salts. Anionic emulsifiers include the oil-soluble salts (e.g., calcium) of alkylaryl sulfonic acids, oil-soluble salts or sulfated polyglycol ethers and appropriate salts of phosphated polyglycol ether.

Representative organic liquids which can be employed in preparing the emulsifiable concentrates of the present disclosure are the aromatic liquids such as xylene, propyl benzene fractions, or mixed naphthalene fractions, mineral oils, substituted aromatic organic liquids such as dioctyl phthalate, kerosene, dialkyl amides of various fatty acids, particularly the dimethyl amides of fatty glycols and glycol derivatives such as the n-butyl ether, ethyl ether or methyl ether of diethylene glycol, and the methyl ether of triethylene glycol. Mixtures of two or more organic liquids are also often suitably employed in the preparation of the emulsifiable concentrate. The preferred organic liquids are xylene, and propyl benzene fractions, with xylene being most preferred. The surface-active dispersing agents are usually employed in liquid formulations and in the amount of from 0.1 to 20 percent by weight of the combined weight of the dispersing agent with the synergistic compositions. The formulations can also contain other compatible additives, for example, plant growth regulators and other biologically active compounds used in agriculture.

Aqueous suspensions comprise suspensions of one or more water-insoluble compounds, dispersed in an aqueous vehicle at a concentration in the range from about 5% to about 70% by weight, based on the total weight of the aqueous suspension formulation. Suspensions are prepared by finely grinding the components of the synergistic combination either together or separately, and vigorously mixing the ground material into a vehicle comprised of water and surfactants chosen from the same types discussed above. Other ingredients, such as inorganic salts and synthetic or natural gums, may also be added to increase the density and viscosity of the aqueous vehicle. It is often most effective to grind and mix at the same time by preparing the aqueous mixture and homogenizing it in an implement such as a sand mill, ball mill, or piston-type homogenizer.

The synergistic composition may also be applied as a granular formulation, which is particularly useful for applications to the soil. Granular formulations usually contain from about 0.5% to about 10% by weight of the compounds, based on the total weight of the granular formulation, dispersed in a carrier which consists entirely or in large part of coarsely divided attapulgite, bentonite, diatomite, clay or a similar inexpensive substance. Such formulations are usually prepared by dissolving the synergistic composition in a suitable solvent and applying it to a granular carrier which has been preformed to the appropriate particle size, in the range of from about 0.5 to about 3 mm. Such formulations may also be prepared by making a dough or paste of the carrier and the synergistic composition, and crushing and drying to obtain the desired granular particle.

Dusts containing the synergistic composition are prepared simply by intimately mixing the synergistic composition in powdered form with a suitable dusty agricultural carrier, such as, for example, kaolin clay, ground volcanic rock, and the like. Dusts can suitably contain from about 1% to about 10% by weight of the synergistic composition/carrier combination.

The formulations may contain agriculturally acceptable adjuvant surfactants to enhance deposition, wetting and penetration of the synergistic composition onto the target crop and organism. These adjuvant surfactants may optionally be employed as a component of the formulation or as a tank mix. The amount of adjuvant surfactant will vary from 0.01 percent to 1.0 percent volume/volume (v/v) based on a spray-volume of water, preferably 0.05 to 0.5 percent. Suitable adjuvant surfactants include ethoxylated nonyl phenols, ethoxylated synthetic or natural alcohols, salts of the esters or sulfosuccinic acids, ethoxylated organosilicones, ethoxylated fatty amines and blends of surfactants with mineral or vegetable oils.

The formulations may optionally include combinations that can comprise at least 1% by weight of one or more of the synergistic compositions with another pesticidal compound. Such additional pesticidal compounds may be fungicides, insecticides, nematocides, miticides, arthropodicides, bactericides or combinations thereof that are compatible with the synergistic compositions of the present disclosure in the medium selected for application, and not antagonistic to the activity of the present compounds. Accordingly, in such embodiments the other pesticidal compound is employed as a supplemental toxicant for the same or for a different pesticidal use. The pesticidal compound and the synergistic

composition can generally be mixed together in a weight ratio of from 1:100 to 100:1.

The present disclosure includes within its scope methods for the control or prevention of fungal attack. These methods comprise applying to the locus of the fungus, or to a locus in which the infestation is to be prevented (for example applying to wheat or barley plants), a fungicidally effective amount of the synergistic composition. The synergistic composition is suitable for treatment of various plants at fungicidal levels, while exhibiting low phytotoxicity. The synergistic composition is useful in a protectant or eradicant fashion. The synergistic composition is applied by any of a variety of known techniques, either as the synergistic composition or as a formulation comprising the synergistic composition. For example, the synergistic compositions may be applied to the roots, seeds or foliage of plants for the control of various fungi, without damaging the commercial value of the plants. The synergistic composition is applied in the form of any of the generally used formulation types, for example, as solutions, dusts, wettable powders, flowable concentrates, or emulsifiable concentrates. These materials are conveniently applied in various known fashions.

The synergistic composition has been found to have significant fungicidal effect, particularly for agricultural use. The synergistic composition is particularly effective for use with agricultural crops and horticultural plants, or with wood, paint, leather or carpet backing.

In particular, the synergistic composition is effective in controlling a variety of undesirable fungi that infect useful plant crops. The synergistic composition may be used against the *Ascomycete* fungus rice blast (*PYRICULARIA ORYZAE*; Bayer code PYRIOR). It will be understood by those in the art that the efficacy of the synergistic compositions for the foregoing fungus establishes the general utility of the synergistic compositions as fungicides.

The synergistic compositions have a broad range of efficacy as a fungicide. The exact amount of the synergistic composition to be applied is dependent not only on the relative amounts of the components, but also on the particular action desired, the fungal species to be controlled, and the stage of growth thereof, as well as the part of the plant or other product to be contacted with the synergistic composition. Thus, formulations containing the synergistic composition may not be equally effective at similar concentrations or against the same fungal species.

The synergistic compositions are effective in use with plants in a disease-inhibiting and phytologically acceptable amount. The term "disease-inhibiting and phytologically acceptable amount" refers to an amount of the synergistic composition that kills or inhibits the plant disease for which control is desired, but is not significantly toxic to the plant. The exact concentration of synergistic composition required varies with the fungal disease to be controlled, the type of formulation employed, the method of application, the particular plant species, climate conditions, and the like.

The present compositions can be applied to fungi or their locus by the use of conventional ground sprayers, granule applicators, and by other conventional means known to those skilled in the art.

The following examples are provided to further illustrate the disclosure. They are not meant to be construed as limiting the disclosure. Only the combinations of TCA and Benzovindiflupyr reflect the present invention.

## Examples

### Evaluation of Protectant Activity of Fungicide Mixtures for control Rice Blast (*PYRICULARIA ORYZAE;* Bayer code PYRIOR):

Twelve day old rice seedlings (cultivar M202) were inoculated 24 hours after application of the fungicides. Conidia were applied at a concentration of 1 x $10^6$/mL. The seedlings were retained in a dew room (100% RH) for 24 hours and then were moved to a greenhouse until disease evaluation 10 days later.

Treatments consisted of tricyclazole and at least one fungicide selected from the group consisting of benzovindiflupyr and fluxapyroxad.

**Spray solution Preparation:** active ingredients were dissolved in acetone as stock solution and serial diluted four times. Final fungicide rates were obtained by mixing stock solution diluted with 9 parts of water containing 110 parts per million (ppm) Triton X-100.

**Fungicide application:** twenty milliliter (mL) fungicide solutions were sprayed onto 12 pots of plants using an automated booth sprayer, which utilized two 6218-1/4 JAUPM spray nozzles operating at 20 pounds per square inch (psi) set at opposing angles to cover both leaf surfaces. Control plants were sprayed in the same manner with the solvent blank. Plants were inoculated 24hr after fungicide application

**Diseases assessment:** infection levels were assessed visually and scored using 0 to 100 percent, 7 days after inoculation of rust. The percent disease control was calculated using the ratio of treated by untreated plants.

Colby's equation was used to determine the fungicidal effects expected from the mixtures. (See Colby, S. R. Calculation of the synergistic and antagonistic response of herbicide combinations. Weeds 1967, 15, 20 - 22.)

The following equation was used to calculate the expected activity of mixtures containing two active ingredients, A and B:

$$\text{Expected} = A + B - (A \times B/100)$$

A = observed efficacy of active component A at the same concentration as used in the mixture;
B = observed efficacy of active component B at the same concentration as used in the mixture.

Representative synergistic interactions are presented in the following Table 1.

Table 1: Synergistic Interactions of Tricyclazole (TCA) and Other Fungicides in 1 Day Protectant (1DP) *PYRICULARIA ORYZAE* (PYRIOR) Tests.

| Composition | | | Rates (ppm)* | PYRIOR* (%DC)* | | Synergism Factor* |
|---|---|---|---|---|---|---|
| | | | | Observed* | Expected* | |
| TCA | + | Benzovindiflupyr | 0.1 + 0.4 | 75.1 | 50.0 | 1.5 |
| TCA | + | Benzovindiflupyr | 0.1+0.1 | 75.1 | 50.0 | 1.5 |
| TCA | + | Benzovindiflupyr | 0.1 + 0.025 | 70.1 | 50.0 | 1.4 |
| TCA | + | Fluxapyroxad | 0.4 + 6.25 | 100 | 95.0 | 1.05 |
| TCA | + | Fluxapyroxad | 0.4+1.56 | 100 | 95.0 | 1.05 |
| TCA | + | Fluxapyroxad | 0.1 + 25 | 70.1 | 50.0 | 1.4 |
| TCA | + | Fluxapyroxad | 0.1 + 6.25 | 85.1 | 50.0 | 1.7 |
| TCA | + | Fluxapyroxad | 0.1 + 1.56 | 65.2 | 50.0 | 1.3 |
| TCA | | | 6.25 | 100 | --- | --- |
| TCA | | | 1.56 | 100 | --- | --- |
| TCA | | | 0.4 | 95 | --- | --- |
| TCA | | | 0.1 | 50.2 | --- | --- |
| Benzovindiflupyr | | | 0.4 | 10.4 | --- | --- |
| Benzovindiflupyr | | | 0.1 | 0 | --- | --- |
| Benzovindiflupyr | | | 0.025 | 0 | --- | --- |
| Fluxapyroxad | | | 25 | 40.3 | --- | --- |
| Fluxapyroxad | | | 6.25 | 0 | --- | --- |
| Fluxapyroxad | | | 1.56 | 0 | --- | --- |

*PYRIOR = Rice Blast; *PYRICULARIA ORYZAE*
*%DC Observed = Percent disease control observed
*%DC Expected = Percent disease control expected
*ppm = Parts per million
*Synergism factor = (%DC Observed / %DC Expected); Values > 1.0 are synergistic.

## Claims

**1.** A synergistic fungicidal mixture, comprising:
a fungicidally effective amount of tricyclazole:

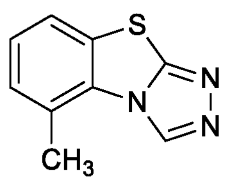

and
benzovindiflupyr.

2. The mixture of Claim 1 in which the concentration ratio of tricyclazole to benzovindiflupyr is between about 1:4 and about 4:1 ppm in 1DP assays.

3. A fungicidal composition comprising a fungicidally effective amount of the fungicidal mixture of Claims 1 or 2 and an agriculturally acceptable adjuvant or carrier.

4. A method for the control and prevention of fungal attack on a plant, the method comprising: applying a fungicidally effective amount of the synergistic fungicidal mixture or the fungicidal composition comprising said mixture of any one of the preceding claims, wherein said effective amount is applied to at least one of the plant, an area adjacent to the plant, soil adapted to support growth of the plant, a root of the plant, foliage of the plant, and a seed adapted to produce the plant.

## Patentansprüche

1. Eine synergistische fungizide Mischung umfassend:

eine fungizid wirksame Menge von Tricyclazol:

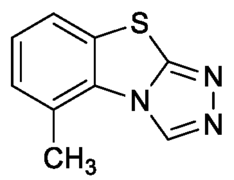

und
Benzovindiflupyr.

2. Die Mischung gemäß Anspruch 1, in welcher das Konzentrationsverhältnis von Tricyclazol zu Benzovindiflupyr zwischen etwa 1:4 und etwa 4:1 in 1-Tages-schützenden (1DP) Assays beträgt.

3. Eine fungizide Zusammensetzung umfassend eine fungizid wirksame Menge der fungiziden Mischung gemäß Anspruch 1 oder 2 und einen landwirtschaftlich akzeptablen Hilfs- oder Trägerstoff.

4. Ein Verfahren zur Bekämpfung und Verhinderung eines Pilzbefalls auf einer Pflanze, wobei das Verfahren umfasst: Anwenden einer fungizid wirksamen Menge der synergistischen fungiziden Mischung oder der fungiziden Zusammensetzung umfassend diese Mischung gemäß irgendeinem der vorhergehenden Ansprüche, wobei die wirksame Menge auf mindestens eines von der Pflanze, einer an die Pflanze angrenzenden Fläche, Boden, der zur Unterstützung des Wachstums der Pflanze ausgelegt ist, einer Wurzel der Pflanze, Blattwerk der Pflanze und einem Samen, der zur Hervorbringung der Pflanze geeignet ist, ausgebracht wird.

## Revendications

1. Mélange fongicide synergique, comprenant,

- en une quantité à effet fongicide, du tricyclazole :

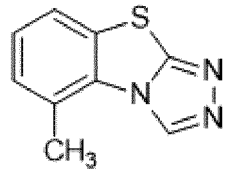

- er du benzovindiflupyr.

2. Mélange conforme à la revendication 1, dans lequel le rapport de concentrations en ppm, du tricyclazole au benzovindiflupyr, vaut entre environ 1/4 et environ 4/1, dans des essais 1DP.

3. Composition fongicide comprenant, en une quantité à effet fongicide, un mélange fongicide conforme à la revendication 1 ou 2, et un adjuvant ou véhicule admissible en agriculture.

4. Procédé de lutte ou de prévention contre l'attaque d'un végétal par un champignon, lequel procédé comporte le fait d'appliquer, en une quantité à effet fongicide, un mélange fongicide synergique, ou une composition fongicide comprenant un tel mélange, conforme à l'une des revendications précédentes, laquelle quantité efficace est appliquée sur au moins l'un des objets suivants : le végétal, une zone adjacente au végétal, un sol adapté pour soutenir la croissance du végétal, une racine du végétal, le feuillage du végétal, et une semence adaptée pour produire le végétal.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 103385256 A


### Non-patent literature cited in the description


- The Pesticide Manual. 2009
- **COLBY, S. R.** Calculation of the synergistic and antagonistic response of herbicide combinations. *Weeds,* 1967, vol. 15, 20-22